# FASCICULE DE BREVET EUROPEEN

(11) **EP 3 446 470 B1**
(45) Date de publication et mention de la délivrance du brevet: **28.10.2020**
(21) Numéro de dépôt: 17718084.1
(22) Date de dépôt: 19.04.2017
(51) Int. Cl.: H04M 3/42, H04M 7/00, H04M 7/12, H04W 4/00

(54) **PROCÉDÉ DE GESTION DE LA RÉCEPTION D'UN APPEL TÉLÉPHONIQUE SUR UN TERMINAL DE COMMUNICATION APPELÉ**
VERFAHREN ZUR VERWALTUNG DES EMPFANGS EINES TELEFONANRUFES AUF EINEM ANGERUFENEN KOMMUNIKATIONSENDGERÄT
METHOD FOR MANAGING THE RECEPTION OF A TELEPHONE CALL ON A CALLED COMMUNICATION TERMINAL

(30) Priorité: 19.04.2016 FR 1653431
(43) Date de publication de la demande: 27.02.2019
(73) Titulaire: Onoff Telecom, 75010 Paris (FR)
(72) Inventeur: KHRIS, Taïg, 75010 Paris (FR)
(74) Mandataire: Argyma
(86) Numéro de dépôt international: PCT/EP2017/059257
(87) Numéro de publication internationale: WO 2017/182505

(56) Documents cités:
- WO-A1-2012/001016
- KR-A- 20040 060 237
- US-A1- 2009 268 897

## Description

### DOMAINE TECHNIQUE ET OBJET DE L'INVENTION

De façon générale, l'invention concerne le domaine des télécommunications. En particulier, le procédé selon l'invention permet l'établissement d'une communication téléphonique, notamment entre deux terminaux de communication portables susceptibles de participer à une liaison téléphonique sur un réseau de communication téléphonique, par exemple de type GSM (pour « Global System for Mobile Communication » selon l'acronyme anglais signifiant « système global de communication mobile », technologie également désignée sous l'appellation 2G), UMTS (pour « Universal Mobile Telecommunications System » selon l'acronyme anglais signifiant « système de télécommunications mobile universel », technologie également désignée sous l'appellation 3G) ou LTE (pour « Long Term Evolution » selon l'acronyme anglais signifiant « évolution à long terme », technologie également désignée sous l'appellation 4G), comme sur un réseau de communication de données, au moyen d'une technologie dite de « voix sur IP » (IP pour « Internet Protocol » selon l'acronyme anglais signifiant « protocole internet », bien connu de l'homme du métier).

### ETAT DE LA TECHNIQUE

Comme cela est connu, de nombreux terminaux de communication, en particulier des terminaux de communication portables, tels que ceux couramment désignés pour le terme de « smartphones » sont aptes à établir entre des communications aussi bien via un réseau de communication téléphonique que via un réseau de communication de données.

Cependant, il n'est pas rare que la qualité des réseaux de communication téléphonique et de données ne soit pas équivalente, voire que l'un des réseaux soit indisponible.

Intrinsèquement, l'établissement d'une communication en voix sur IP, via un réseau de communication de données, engendre une certaine dégradation du signal dans la mesure où le signal émis est découpé en paquets compressés puis réassemblés.

Pour établir une communication en voix sur IP, lorsque l'on est en mobilité, la couverture réseau doit en outre être suffisante car les technologies permettant d'établir ces communications en voix sur IP sont assez consommatrices en bande passante, nécessitant typiquement plusieurs mégabits par seconde.

D'un autre côté, les situations dans lesquelles le réseau de communication téléphonique est indisponible alors qu'un accès à internet, par exemple en wifi, est disponible, sont fréquentes. Typiquement, lorsqu'un utilisateur se trouve en transit dans un aéroport ou dans un hôtel à l'étranger, il peut disposer d'une liaison à un réseau de communication de données et non à un réseau de communication téléphonique. A l'intérieur de bâtiment, il n'est pas rare également que le réseau de communication téléphonique ne soit pas accessible alors qu'un accès au réseau de communication de données, soit à internet via un réseau wifi, est disponible.

Cette situation peut par ailleurs être l'objet d'un choix économique, les communications via un réseau de communication téléphonique depuis l'étranger étant souvent sujettes à des frais d'itinérance parfois élevés.

Ces exemples non exhaustifs montrent qu'il peut être, en fonction du lieu, de la situation, ou d'autres paramètres, plus intéressant qu'une communication téléphonique s'établissant via le réseau de communication téléphonique (mode « voix ») ou via le réseau de communication de données (mode « données » via des techniques de «voix sur IP »). Il faut noter, par ailleurs, que l'appelant et l'appelé n'ont bien entendu par nécessairement le même intérêt.

Ainsi, l'invention vise à permettre l'établissement d'une communication téléphonique entre deux terminaux portables selon un mode choisi par l'utilisateur appelé, indépendamment du mode choisi par l'appelant pour émettre son appel, et de façon transparente pour ledit appelant.

Pour répondre partiellement à cette problématique, l'état de la technique connaît un procédé d'établissement d'une liaison téléphonique permettant de convertir un signal d'appel téléphonique initialement émis par un premier terminal de communication via un réseau de communication de données, en un signal d'appel téléphonique transitant sur un réseau de communication téléphonique, et reçu par un deuxième terminal de communication via ce réseau de communication téléphonique. Selon ce procédé, le premier terminal de communication stocke une application de communication de type « voix sur IP », et un serveur de voix sur IP établit la communication entre les premier et deuxième terminaux de communication. Plus précisément, le serveur de voix sur IP est relié au premier terminal de communication via le réseau de communication numérique, et au deuxième terminal de communication via le réseau de communication téléphonique. En fonctionnement, après réception du signal initial d'appel téléphonique émis par le premier terminal de communication, le serveur convertit ce signal en un signal d'appel téléphonique à destination du deuxième terminal de communication sur le réseau de communication téléphonique. Lorsque le signal d'appel est accepté par le deuxième terminal, le serveur aboute les deux signaux d'appel téléphonique et la communication est établie.

Toutefois, cette solution ne permet pas à l'utilisateur appelé de choisir le mode d'établissement de la communication, alors qu'il peut être, dans certains cas, plus intéressant de décrocher en mode « voix » ou en mode « données ».

Par exemple, un problème subsiste dans le cas où le premier terminal émet un signal d'appel téléphonique sur le réseau de communication téléphonique et que l'utilisateur appelé a intérêt ou a seulement la possibilité de décrocher en mode « données » car il dispose d'un accès à un réseau satisfaisant à un réseau de communication de données et pas à un réseau de communication téléphonique.

Les documents US 2009/268897 et WO 2012/001016 décrivent des exemples d'état de la technique.

Il existe donc bien un besoin pour un procédé permettant à un utilisateur appelé de choisir le mode d'établissement de la communication lorsqu'un appel téléphonique est émis à son attention, et ce quel que soit le réseau de communication - téléphonique ou de données - choisi par l'appelant pour émettre le signal d'appel téléphonique.

A cette fin, la présente invention concerne un procédé de gestion de la réception d'un signal d'appel téléphonique sur un terminal de communication appelé, permettant à l'utilisateur dudit terminal de communication appelé de sélectionner par une action spécifique sur ledit terminal le mode d'établissement de la liaison téléphonique.

Dans ce but, le procédé selon l'invention met en œuvre une architecture de système de communication comprenant un serveur apte à obtenir un numéro temporaire associé au terminal de communication appelant, un serveur de voix sur IP et un serveur applicatif apte à notifier à l'utilisateur du service l'existence d'un signal d'appel téléphonique qui lui est destiné.

### PRESENTATION GENERALE DE L'INVENTION

A cet effet, plus précisément, l'invention vise un procédé de gestion de la réception d'un signal d'appel téléphonique sur un terminal de communication appelé, en particulier un terminal de communication appelé portable, en vue de l'établissement d'une liaison téléphonique avec un terminal de communication appelant, en particulier un terminal de communication appelant portable, ladite liaison téléphonique étant établie par l'intermédiaire d'au moins un serveur relié audit terminal de communication appelé et audit terminal de communication appelant, ledit terminal de communication appelé étant apte à recevoir le signal d'appel téléphonique selon au moins deux modes d'établissement de la liaison téléphonique, comprenant un mode « voix », dans lequel la liaison téléphonique entre le terminal de communication appelé et le serveur est assurée par l'intermédiaire d'un réseau de communication téléphonique, et un mode « données », dans lequel la liaison téléphonique entre le terminal de communication appelé et le serveur est assurée par l'intermédiaire d'un réseau de communication de données selon une technologie de « voix sur IP », ledit procédé comprenant par ailleurs la sélection directe, par l'utilisateur du procédé, via une action spécifique sur ledit terminal de communication appelé, du mode d'établissement de la liaison téléphonique.

Grâce au procédé selon l'invention, l'utilisateur choisit le meilleur mode d'établissement de la liaison téléphonique, de son point de vue, et ladite liaison est établie de façon transparente pour l'appelant, quel que soit le réseau de communication - téléphonique ou de données - sur lequel le signal d'appel téléphonique est initialement émis par le terminal de communication appelant et quel que soit le mode d'établissement de la liaison téléphonique choisi par l'utilisateur.

Selon un mode de réalisation, le procédé selon l'invention comprend les étapes suivantes, suite à l'émission d'un signal d'appel téléphonique initial à partir d'un terminal de communication appelant sur un réseau de communication téléphonique, à destination d'un numéro correspondant à un terminal de communication appelé d'un utilisateur du procédé :
- la réception par un serveur d'appel du signal d'appel téléphonique émis par le terminal de communication appelant ;
- l'attribution par le serveur d'appel d'un numéro temporaire au terminal de communication appelant ;
- la notification du signal d'appel téléphonique et du numéro temporaire à un serveur de voix sur IP et à un serveur applicatif, lesdits serveurs de voix sur IP et applicatif étant reliés au terminal de communication appelé ;
- la notification du signal d'appel téléphonique et du numéro temporaire au terminal de communication appelé par le serveur applicatif ;
- l'affichage sur un écran du terminal de communication appelé d'une interface homme-machine permettant à l'utilisateur de choisir le mode d'établissement de la liaison téléphonique.
- la sélection par l'utilisateur, via ladite interface homme-machine, du mode d'établissement de la liaison téléphonique.

Selon un mode de réalisation, l'obtention du numéro temporaire par le serveur d'appel est réalisée par consultation d'une base de données de numéros temporaires disponibles.

Avantageusement :
- si l'utilisateur choisit de recevoir le signal d'appel téléphonique en mode « voix »,
   ∘ l'émission par le terminal de communication appelé d'un signal d'appel téléphonique retour à destination du numéro temporaire attribué par le serveur d'appel au terminal de communication appelant, ledit signal d'appel téléphonique retour étant émis sur le réseau de communication téléphonique ;
   ∘ la réception par le serveur d'appel du signal d'appel téléphonique retour ;
   ∘ la reconstitution par le serveur d'appel, par aboutement entre le signal d'appel téléphonique émis initialement par le terminal de communication appelant et le signal d'appel téléphonique retour émis par le terminal de communication appelé, de la liaison téléphonique ;
- si l'utilisateur choisit de recevoir le signal d'appel téléphonique en mode « données » :
   ∘ l'émission par le terminal de communication appelé d'un signal d'appel téléphonique retour à destination du numéro temporaire attribué par le serveur d'appel au terminal de communication appelant, ledit signal d'appel téléphonique retour étant émis sur le réseau de communication de données par l'intermédiaire du serveur de voix sur IP ;
   ∘ la transmission du signal d'appel retour par le serveur de voix sur IP au serveur d'appel ;
   ∘ la réception par le serveur d'appel du signal d'appel téléphonique retour ;
   ∘ la reconstitution de la liaison téléphonique par le serveur d'appel, par aboutement entre le signal d'appel téléphonique émis initialement par le terminal de communication appelant et le signal d'appel téléphonique retour émis par le terminal de communication appelé.

Selon un mode de réalisation, le procédé selon l'invention comprend les étapes suivantes, suite à l'émission d'un signal d'appel téléphonique initial à partir d'un terminal de communication appelant sur un réseau de communication de données, selon une technologie de voix sur IP, à destination d'un numéro correspondant à un terminal de communication appelé d'un utilisateur du procédé :
- la réception par le serveur de voix sur IP du signal d'appel téléphonique émis par le terminal de communication appelant ;
- la notification du signal d'appel téléphonique au serveur applicatif ;
- l'attribution par le serveur applicatif d'un numéro temporaire au terminal de communication appelant ;
- la notification du signal d'appel téléphonique et du numéro temporaire au terminal de communication appelé ;
- l'affichage sur un écran du terminal de communication appelé d'une interface homme-machine permettant à l'utilisateur de choisir le mode d'établissement de la liaison téléphonique.
- la sélection par l'utilisateur, via ladite interface homme-machine, du mode d'établissement de la liaison téléphonique.

Dans ce cas également, l'obtention du numéro temporaire par le serveur applicatif peut être réalisée par consultation d'une base de données de numéros temporaires disponibles.

Avantageusement :
- si l'utilisateur choisit de recevoir le signal d'appel téléphonique en mode « voix »,
   ∘ l'émission par le terminal de communication appelé d'un signal d'appel téléphonique retour à destination du numéro temporaire attribué par le serveur applicatif au terminal de communication appelant, ledit signal d'appel téléphonique retour étant émis sur le réseau de communication téléphonique ;
   ∘ la réception par le serveur d'appel du signal d'appel téléphonique retour ;
   ∘ la transmission du signal d'appel téléphonique retour par le serveur d'appel au serveur de voix sur IP ;
   ∘ la reconstitution de la liaison téléphonique par le serveur de voix sur IP, par aboutement entre le signal d'appel téléphonique émis initialement par le terminal de communication appelant et le signal d'appel téléphonique retour émis par le terminal de communication appelé ;
- si l'utilisateur choisit de recevoir le signal d'appel téléphonique en mode « données » :
   ∘ l'émission par le terminal de communication appelé d'un signal d'appel téléphonique retour à destination du numéro temporaire attribué par le serveur d'appel au terminal de communication appelant, ledit signal d'appel téléphonique retour étant émis sur le réseau de communication de données par l'intermédiaire du serveur de voix sur IP ;
   ∘ la reconstitution de la liaison téléphonique par le serveur de voix sur IP, par aboutement entre le signal d'appel téléphonique émis initialement par le terminal de communication appelant et le signal d'appel téléphonique retour émis par le terminal de communication appelé.

Selon un mode de réalisation, le terminal de communication appelé comporte une application logicielle apte à réceptionner toute notification de signal d'appel téléphonique notifiée par le serveur applicatif, à afficher ladite interface-homme-machine et à commander l'émission par ledit terminal de communication appelé du signal d'appel téléphonique retour, en mode « voix » ou en mode « données », en fonction du mode d'établissement de la communication choisi par l'utilisateur.

Selon un mode de réalisation, le signal d'appel téléphonique initial est émis, par l'intermédiaire du réseau de communication téléphonique, à destination d'un numéro virtuel de l'utilisateur du procédé, le serveur applicatif étant apte à associer ledit numéro virtuel au terminal de communication appelé.

Par ailleurs, il est à noter que l'invention vise aussi un système de réseau de communication, comprenant un serveur d'appel, un serveur de voix sur IP, un serveur applicatif, une base de données de numéros temporaires disponibles, un réseau de communication téléphonique apte à être relié à un terminal de communication appelant et à un terminal de communication appelé, et un réseau de communication de données apte à être relié à un terminal de communication appelant et à un terminal de communication appelé, configurés pour mettre en œuvre le procédé de gestion de la réception d'un signal d'appel téléphonique brièvement décrit ci-dessus.

### DESCRIPTION DES FIGURES

L'invention sera mieux comprise à la lecture de la description qui va suivre, donnée uniquement à titre d'exemple, et se référant aux dessins annexés sur lesquels :
- la figure 1 représente le schéma de mise en œuvre du procédé selon l'invention lorsqu'un appelant émet un signal d'appel téléphonique sur le réseau de communication téléphonique ;
- la figure 2 représente le schéma de mise en œuvre du procédé selon l'invention lorsqu'un appelant émet un signal d'appel téléphonique sur le réseau de communication de données.

### DESCRIPTION DETAILLEE DE L'INVENTION

Il est rappelé que la présente invention est décrite ci-après à l'aide de différents modes de réalisation non limitatifs et est susceptible d'être mise en œuvre dans des variantes à la portée de l'homme du métier, également visées par la présente invention.

Dans la suite de la description, on entend par « terminal de communication » tout dispositif électronique, notamment tout téléphone portable de type « smartphone », doté de moyens de calcul et de moyens de stockage de données et apte à transmettre et à recevoir des données via un réseau de communication téléphonique et ou de données.

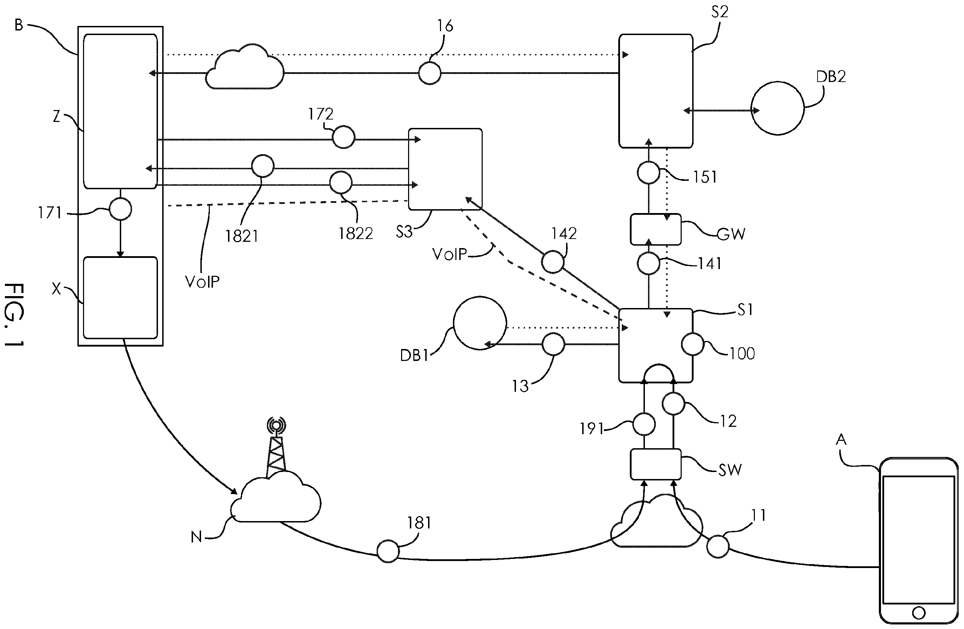

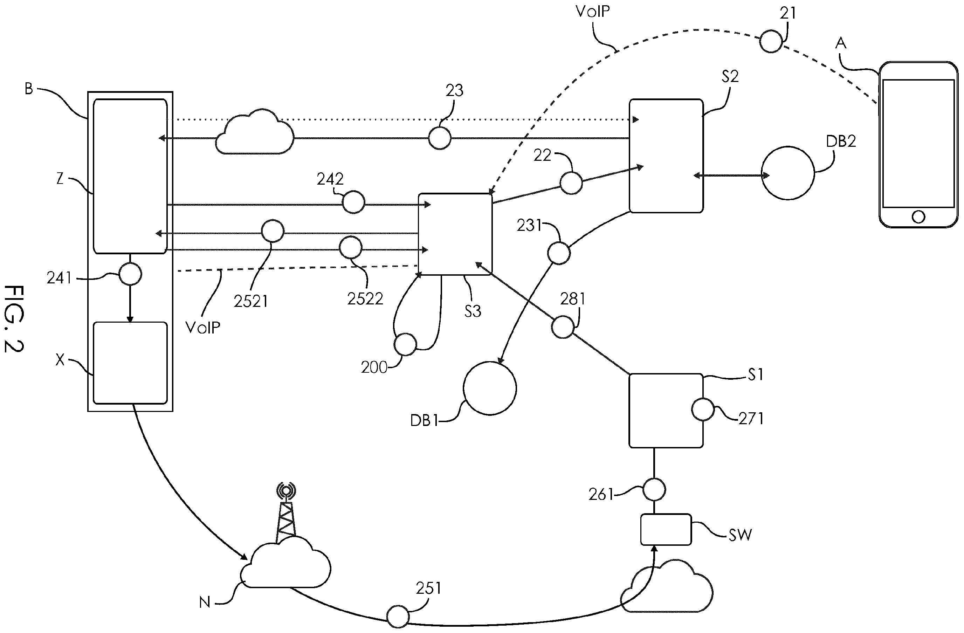

Sur les figures 1 et 2, les terminaux de communication A et B sont ainsi, en particulier, des smartphones connectés à un réseau de communication téléphonique N et à un réseau de communication de données.

Il est rappelé qu'un réseau de communication téléphonique N consiste en une infrastructure de communication privée ou étendue permettant la connexion d'une pluralité d'équipements de communication tels que des serveurs, des commutateurs, des bases de données et des terminaux de communication. De manière connue, l'infrastructure de communication d'un réseau de communication téléphonique forme un réseau sans fil et/ou filaire. En particulier, dans le contexte de l'invention, le réseau de communication téléphonique est de préférence de type GSM, UMTS ou LTE.

Il est également rappelé qu'un réseau de communication de données consiste en une infrastructure de communication privée ou étendue permettant la connexion d'une pluralité d'équipements de communication, tels que des serveurs, des commutateurs, des bases de données ou des terminaux de communication par exemple. De manière connue, l'infrastructure de communication d'un réseau de communication de données forme un réseau sans fil et/ou filaire. Dans le contexte de l'invention, le réseau de communication de données est notamment un réseau conforme au protocole IP.

### 1^{er} cas d'utilisation : un terminal de communication appelant émet un signal d'appel initial téléphonique sur un réseau de communication téléphonique :

En référence à la figure 1, il est représenté un terminal de communication A appelant cherchant à joindre le numéro - ou un identifiant - d'un utilisateur appelé, le signal d'appel téléphonique étant émis sur un réseau de communication téléphonique N, autrement dit en mode « voix ». L'appelant présente également un numéro ou un identifiant permettant de joindre le terminal de communication appelant A.

Selon l'invention, le signal d'appel émis 11 est orienté 12, via un commutateur classique SW, vers un serveur d'appel S1 apte à mettre en attente le signal d'appel pendant un bref moment, de l'ordre de quelques millisecondes, laps de temps durant lequel le serveur d'appel S1 attribue un numéro temporaire au terminal de communication appelant A. Selon un mode de réalisation, l'obtention du numéro temporaire par le serveur d'appel S1 est réalisée par consultation 13 d'une base de données DB1 de numéros temporaires disponibles.

Le serveur d'appel S1 notifie 141, 142 ensuite le signal d'appel émis, parallèlement, à un serveur de voix sur IP S3 et, via 151 une passerelle GW, à un serveur applicatif S2, en communiquant à chaque fois le numéro temporaire et l'identifiant réel de l'appelant ainsi que, le cas échéant, un jeu de caractéristiques du signal d'appel émis.

Le serveur applicatif S2 connaît à cet instant le numéro appelé. En particulier, selon un mode de réalisation, le numéro appelé est un numéro virtuel d'un utilisateur abonné au service mettant en œuvre le procédé selon l'invention. Selon ce mode de réalisation, le serveur applicatif S2 accède alors à une base de données DB2 par l'intermédiaire de laquelle il peut vérifier si l'utilisateur correspondant au numéro virtuel appelé est bien abonné au service et associe le numéro virtuel appelé au numéro réel ou à un identifiant quelconque via lequel l'utilisateur appelé est connecté sur son terminal de communication, par exemple à travers une application logicielle dédiée. Selon un mode de réalisation, le serveur applicatif S2 vérifie par ailleurs s'il existe des paramètres de configuration associés. Ces paramètres de configuration concernent par exemple la classification du numéro virtuel appelé comme étant un numéro personnel ou professionnel et/ou des plages horaires auxquelles, par exemple, seuls certains appels doivent être notifiés et les autres refusés systématiquement, etc.

Le serveur applicatif S2 notifie 16 ensuite le signal d'appel téléphonique émis par le terminal de communication appelant à l'utilisateur correspondant au numéro appelé, ledit numéro pouvant être, comme décrit précédemment, un numéro virtuel.

Sur son terminal portable B, l'utilisateur appelé, s'il décide d'accepter le signal d'appel, dispose alors de moyens pour décider du mode d'établissement de la communication.

Selon un mode de réalisation, le terminal portable appelé B comporte une application logicielle Z dédiée comprenant une interface homme-machine permettant à l'utilisateur de saisir son choix. Par exemple, un premier bouton permettant de décrocher peut s'afficher en bas à gauche de l'écran pour décrocher en établissant la communication sur le réseau de communication de données, c'est-à-dire en mode « données », selon une technologie de voix sur IP, tandis qu'un second bouton permettant de décrocher affiche en bas à droite de l'écran pour décrocher en établissant la communication sur le réseau de communication téléphonique N, c'est-à-dire en mode « voix ».

Selon un autre mode de réalisation, l'application logicielle Z comprend une interface homme-machine affichant une barre coulissante à l'écran lorsqu'un appel émis est notifié à ladite application par le serveur applicatif S2.

Dès lors, par exemple, si l'utilisateur agit sur la barre coulissante en la faisant glisser vers la gauche, la communication est établie sur le réseau de communication de données et si l'utilisateur agit sur la barre coulissante en la faisant glisser vers la droite, la communication est établie sur le réseau de communication téléphonique N.

Selon l'invention, lorsqu'un signal d'appel téléphonique 11 initialement émis par un terminal de communication appelant A est notifié à un terminal de communication appelé B, selon les étapes du procédé décrit précédemment, l'utilisateur du terminal de communication appelé B choisit, de son point de vue, le mode d'établissement de la communication. En d'autres termes, l'utilisateur appelé choisit de décrocher en mode « données » ou en mode « voix ».

Une fois le mode d'établissement de la communication choisi par l'utilisateur appelé, le terminal B de ce dernier émet un appel à destination de l'appelant, selon le mode de communication choisi, via le module d'appel X du terminal de communication B.

Si l'utilisateur appelé a décroché en mode « voix », le terminal portable de l'utilisateur appelé B émet un appel 181, ou plus précisément un rappel (ou appel téléphonique retour), à destination du numéro temporaire attribué par le serveur d'appel à l'appelant, ledit rappel 181 étant émis sur le réseau de communication téléphonique N. Pour cela, par exemple, l'application logicielle dédiée Z commande 171 au module d'appel X du terminal de communication B d'émettre l'appel téléphonique retour 181 sur le réseau de communication téléphonique N.

Le rappel 181 est orienté 191 via un commutateur classique SW vers le serveur d'appel S1 qui aboute 100 le signal d'appel initial 11, 12, émis par le terminal de communication appelant A, et le rappel 181, 191 émis par le terminal de communication appelé, le serveur d'appel S1 reconstituant ainsi la liaison téléphonique en associant le numéro temporaire et l'identifiant réel de l'appelant.

Si l'utilisateur appelé a décroché en mode « données », le terminal de communication appelé B de l'utilisateur sollicite 172, par exemple via l'application logicielle dédiée Z, le serveur de voix sur IP S3. Le serveur de voix sur IP S3 envoie alors une invitation 1821 au terminal de communication appelé B. Le terminal de communication appelé B, par exemple via l'application logicielle dédiée Z, valide cette invitation 1822 pour établir la communication en voix sur IP (VoIP).

La communication en voix sur IP est transmise par le serveur de voix sur IP S3 au serveur d'appel S2 qui aboute 100 le signal d'appel téléphonique initial 11, 12, émis par le terminal de communication appelant A, et le rappel en voix sur IP (VoIP) émis par le terminal de communication appelé A, le serveur d'appel S1 reconstituant ainsi la liaison téléphonique.

### 2^{ème} cas d'utilisation : un terminal de communication appelant émet un signal d'appel initial téléphonique, en voix sur IP, sur un réseau de communication de données :

La figure 2 représente un deuxième cas de figure de mise en œuvre du procédé selon l'invention. Dans ce cas, l'appelant émet 21 à partir de son terminal de communication A un signal appel à destination d'un numéro ou d'un identifiant de l'utilisateur du procédé sur le réseau de communication de données. En d'autres termes, l'appelant émet, à partir d'un identifiant qui lui est propre, un appel en voix sur IP (VoIP) pour joindre ledit utilisateur.

Ce signal d'appel téléphonique VoIP émis est directement reçu par le serveur de voix sur IP S3. Ce dernier notifie 22 le signal d'appel et ses caractéristiques au serveur applicatif S2. Comme précédemment, selon un mode de réalisation, le serveur applicatif S2 consulte une base de données DB2 pour accéder à des paramètres de configuration associés au numéro appelé, de manière à déterminer, par exemple, si l'utilisateur appelé est abonné au service, et pour tenir compte des caractéristiques du numéro. En particulier, le numéro appelé peut être un numéro virtuel associé à des paramètres de configuration tels que ceux décrits à titre d'illustration dans le 1^{er} cas d'utilisation.

Par ailleurs, le serveur applicatif S2 obtient un numéro temporaire associé à l'identifiant de l'appelant. Selon un mode de réalisation, l'obtention du numéro temporaire par le serveur applicatif S2 est réalisée par consultation 231 d'une base de données DB1 de numéros temporaires disponibles.

Le serveur applicatif S2 notifie 23 alors le signal d'appel et ses caractéristiques à l'utilisateur appelé qui reçoit la notification correspondante sur son terminal de communication B, par exemple via l'application logicielle dédiée Z.

De la même manière que dans le premier cas d'utilisation décrit en regard de la figure 1, l'utilisateur choisit, s'il accepte l'appel, le mode d'établissement de la communication.

Si l'utilisateur appelé décroche en mode « voix », le terminal de communication B de l'utilisateur appelé émet un appel 251, ou plus précisément un rappel (ou appel téléphonique retour), à destination du numéro temporaire attribué par le serveur applicatif S2 à l'appelant, ledit rappel étant émis sur le réseau de communication téléphonique N. Pour cela, par exemple, l'application logicielle dédiée Z commande 241 au module d'appel X du terminal de communication B d'émettre l'appel téléphonique retour 251 sur le réseau de communication téléphonique N.

Le rappel 251 est orienté 261 via un commutateur classique SW vers le serveur d'appel S1 qui réceptionne 271 ledit rappel et le transmet 281 au serveur de voix sur IP S3 où la communication est reconstituée 200 par aboutement, par le serveur de voix sur IP S3, du signal d'appel téléphonique initial VoIP émis par le terminal de communication A appelant et du rappel 251 émis par le terminal de communication appelé B.

Si l'utilisateur appelé décroche en mode « données », le terminal de communication B de l'utilisateur sollicite 242, par exemple via l'application logicielle dédiée Z, le serveur de voix sur IP S3. Le serveur de voix sur IP S3 envoie alors une invitation 2521 au terminal de communication appelé B. Le terminal de communication appelé B, par exemple via l'application logicielle dédiée Z, valide 2522 cette invitation pour établir la communication en voix sur IP (VoIP).

Ainsi, le rappel est émis sur le réseau de communication de données par l'intermédiaire du serveur de voix sur IP S3 et la reconstitution 200 de la liaison téléphonique est assurée par le serveur de voix sur IP S3, par aboutement entre le signal d'appel téléphonique VoIP émis initialement par le terminal de communication appelant A et le signal d'appel téléphonique VoIP retour émis par le terminal de communication appelé B.

Ainsi, grâce au procédé selon l'invention, un utilisateur mettant en œuvre le procédé selon l'invention peut choisir d'accepter un appel en mode « voix » ou en mode « données », quel que soit le mode utilisé pour émettre le signal d'appel. L'utilisateur appelé peut ainsi décrocher en mode « voix » un appel émis via un réseau de communication de données et décrocher en mode « données » un appel émis via un réseau de communication téléphonique.

L'établissement de la communication est obtenu sans les désagréments d'un « rappel » classique, impliquant une coupure de la communication avant un « rappel » de l'appelé vers l'appelant. Selon l'invention, la communication est en effet reconstituée, sans coupure, par aboutement, au moyen de l'association d'un numéro temporaire à l'appelant. Selon le cas, l'aboutement est réalisé par le serveur d'appel ou par le serveur de voix sur IP, sans que l'appelant ne subisse de perturbation.

De même, lorsque le signal d'appel téléphonique initial est émis via le réseau de communication téléphonique, alors la liaison téléphonique établie est acheminée par le réseau de communication téléphonique entre le terminal portable appelant et le serveur d'appel.

De l'autre côté, la liaison téléphonique établie entre le terminal de communication appelé et le serveur d'appel est acheminé soit par le réseau de communication téléphonique, soit par le réseau de communication de données, selon le mode d'établissement de la communication choisi par l'utilisateur du procédé.

Parallèlement, lorsque le signal d'appel téléphonique initial est émis via le réseau de communication de données, c'est-à-dire en voix sur IP, alors la liaison téléphonique établie est acheminée par le réseau de communication de données entre le terminal portable appelant et le serveur de voix sur IP.

De l'autre côté, la liaison téléphonique établie entre le terminal de communication appelé et le serveur de voix sur IP est acheminé soit par le réseau de communication téléphonique, via le serveur d'appel, soit par le réseau de communication de données, selon le mode d'établissement de la communication choisi par l'utilisateur du procédé.

Pour mettre en œuvre ce procédé, la présente invention concerne également une infrastructure de communication dédiée comprenant un commutateur SW, un serveur d'appel S1, une base de données hébergeant des numéros temporaires DB1, un serveur de voix sur IP S3 et un serveur applicatif S2 disposant le cas échéant d'une base de données DB2 hébergeant des paramètres de configuration relatifs aux utilisateurs abonnés au service.

## Revendications

1. Procédé de gestion de la réception d'un signal d'appel téléphonique sur un terminal de communication appelé (B), en particulier un terminal de communication appelé portable, en vue de l'établissement d'une liaison téléphonique avec un terminal de communication appelant (A), en particulier un terminal de communication appelant portable, ladite liaison téléphonique étant établie par l'intermédiaire d'au moins un serveur (S1, S3) relié audit terminal de communication appelé (B) et audit terminal de communication appelant (A), ledit terminal de communication appelé (B) étant apte à recevoir le signal d'appel téléphonique selon au moins deux modes d'établissement de la liaison téléphonique, comprenant un mode « voix », dans lequel la liaison téléphonique entre le terminal de communication appelé (B) et le serveur (S1) est assurée par l'intermédiaire d'un réseau de communication téléphonique (N), et un mode « données », dans lequel la liaison téléphonique entre le terminal de communication appelé (B) et le serveur (S1, S3) est assurée par l'intermédiaire d'un réseau de communication de données selon une technologie de «voix sur IP » (VoIP), ledit procédé étant **caractérisé par** ailleurs la sélection directe, par l'utilisateur du procédé, via une action spécifique sur ledit terminal de communication appelé, du mode d'établissement de la liaison téléphonique.

2. Procédé selon la revendication 1, comprenant les étapes suivantes, suite à l'émission d'un signal d'appel téléphonique initial (11) à partir d'un terminal de communication appelant (A) sur un réseau de communication téléphonique (N), à destination d'un numéro correspondant à un terminal de communication appelé (B) d'un utilisateur du procédé :
- la réception (12) par un serveur d'appel (S1) du signal d'appel téléphonique émis (11) par le terminal de communication appelant (A) ;
- l'attribution par le serveur d'appel (S1) d'un numéro temporaire à au terminal de communication (A) appelant ;
- la notification (141/151, 142) du signal d'appel téléphonique et du numéro temporaire à un serveur de voix sur IP (S3) et à un serveur applicatif (S2), lesdits serveurs de voix sur IP (S3) et applicatif (S2) étant reliés au terminal de communication appelé (B) ;
- la notification (16) du signal d'appel téléphonique et du numéro temporaire au terminal de communication appelé (B) par le serveur applicatif (S2) ;
- l'affichage sur un écran du terminal de communication appelé (B) d'une interface homme-machine permettant à l'utilisateur de choisir le mode d'établissement de la liaison téléphonique.
- la sélection par l'utilisateur, via ladite interface homme-machine, du mode d'établissement de la liaison téléphonique.

3. Procédé selon la revendication précédente, dans lequel l'obtention du numéro temporaire par le serveur d'appel (S1) est réalisée par consultation d'une base de données (DB1) de numéros temporaires disponibles.

4. Procédé selon l'une des revendications 2 à 3, comprenant par ailleurs :
- si l'utilisateur choisit de recevoir le signal d'appel téléphonique en mode « voix »,
∘ l'émission par le terminal de communication appelé (B) d'un signal d'appel téléphonique retour (181) à destination du numéro temporaire attribué par le serveur d'appel (S1) au terminal de communication appelant (A), ledit signal d'appel téléphonique retour (181) étant émis sur le réseau de communication téléphonique (N) ;
∘ la réception (191) par le serveur d'appel (S1) du signal d'appel téléphonique retour (181) ;
∘ la reconstitution par le serveur d'appel (S1), par aboutement entre le signal d'appel téléphonique émis initialement (11, 12) par le terminal de communication appelant (A) et le signal d'appel téléphonique retour (181, 191) émis par le terminal de communication appelé, de la liaison téléphonique ;
- si l'utilisateur choisit de recevoir le signal d'appel téléphonique en mode « données » :
∘ l'émission par le terminal de communication appelé (B) d'un signal d'appel téléphonique retour (VoIP) à destination du numéro temporaire attribué par le serveur d'appel (S1) au terminal de communication appelant (A), ledit signal d'appel téléphonique retour étant émis sur le réseau de communication de données par l'intermédiaire du serveur de voix sur IP (S3) ;
∘ la transmission du signal d'appel retour par le serveur de voix sur IP (S3) au serveur d'appel (S2) ;
∘ la réception par le serveur d'appel du signal d'appel téléphonique retour ;
∘ la reconstitution de la liaison téléphonique par le serveur d'appel (S1), par aboutement entre le signal d'appel téléphonique émis initialement (11, 12) par le terminal de communication appelant (A) et le signal d'appel téléphonique retour (VoIP) émis par le terminal de communication appelé (B).

5. Procédé selon l'une des revendications précédentes combinée à la revendication 2, comprenant les étapes suivantes, suite à l'émission d'un signal d'appel téléphonique initial (21) à partir d'un terminal de communication appelant (A) sur un réseau de communication de données, selon une technologie de voix sur IP, à destination d'un numéro correspondant à un terminal de communication appelé (B) d'un utilisateur du procédé :
- la réception par le serveur de voix sur IP (S3) du signal d'appel téléphonique (21) émis par le terminal de communication appelant (A) ;
- la notification (22) du signal d'appel téléphonique (21) au serveur applicatif (S2) ;
- l'attribution par le serveur applicatif (S2) d'un numéro temporaire au terminal de communication appelant (A) ;
- la notification du signal d'appel téléphonique (21) et du numéro temporaire au terminal de communication appelé ;
- l'affichage sur un écran du terminal de communication appelé (B) d'une interface homme-machine permettant à l'utilisateur de choisir le mode d'établissement de la liaison téléphonique.
- la sélection par l'utilisateur, via ladite interface homme-machine, du mode d'établissement de la liaison téléphonique.

6. Procédé selon la revendication précédente, dans lequel l'obtention du numéro temporaire par le serveur applicatif (S2) est réalisée par consultation (231) d'une base de données (DB1) de numéros temporaires disponibles.

7. Procédé selon l'une des revendications 5 à 6, comprenant par ailleurs :
- si l'utilisateur choisit de recevoir le signal d'appel téléphonique en mode « voix »,
∘ l'émission par le terminal de communication appelé (B) d'un signal d'appel téléphonique retour (251) à destination du numéro temporaire attribué par le serveur applicatif (S2) au terminal de communication appelant (A), ledit signal d'appel téléphonique retour étant émis sur le réseau de communication téléphonique (N) ;
∘ la réception (261) par le serveur d'appel (S1) du signal d'appel téléphonique retour (251) ;
∘ la transmission (281) du signal d'appel téléphonique retour par le serveur d'appel (S1) au serveur de voix sur IP (S3) ;
∘ la reconstitution (200) de la liaison téléphonique par le serveur de voix sur IP (S3), par aboutement entre le signal d'appel téléphonique émis initialement (21) par le terminal de communication appelant (A) et le signal d'appel téléphonique retour émis par le terminal de communication appelé (B) ;
- si l'utilisateur choisit de recevoir le signal d'appel téléphonique en mode « données » :
∘ l'émission (VoIP) par le terminal de communication appelé (B) d'un signal d'appel téléphonique retour à destination du numéro temporaire attribué par le serveur d'appel au terminal de communication appelant, ledit signal d'appel téléphonique retour étant émis sur le réseau de communication de données par l'intermédiaire du serveur de voix sur IP (S3) ;
∘ la reconstitution (200) de la liaison téléphonique par le serveur de voix sur IP, par aboutement entre le signal d'appel téléphonique émis initialement par le terminal de communication appelant et le signal d'appel téléphonique retour émis par le terminal de communication appelé.

8. Procédé selon l'une quelconque des revendications précédentes combinée à la revendication 2, dans lequel le terminal de communication appelé (B) comporte une application logicielle (Z) apte à réceptionner toute notification de signal d'appel téléphonique notifiée par le serveur applicatif (S2), à afficher ladite interface-homme-machine et à commander (171, 241) l'émission par ledit terminal de communication appelé (B) du signal d'appel téléphonique retour, en mode « voix » (181, 251) ou en mode « données » (VoIP), en fonction du mode d'établissement de la communication choisi par l'utilisateur.

9. Procédé selon l'une quelconque des revendications précédentes combinée à la revendication 2, dans lequel le signal d'appel téléphonique initial est émis, par l'intermédiaire du réseau de communication téléphonique, à destination d'un numéro virtuel de l'utilisateur du procédé, le serveur applicatif (S2) étant apte à associer ledit numéro virtuel au terminal de communication appelé (B).

10. Système de réseau de communication, comprenant un serveur d'appel (S1), un serveur de voix sur IP (S3), un serveur applicatif (S2), une base de données de numéros temporaires disponibles (DB1), un réseau de communication téléphonique (N) apte à être relié à un terminal de communication appelant (A) et à un terminal de communication appelé (B), et un réseau de communication de données apte à être relié à un terminal de communication appelant (A) et à un terminal de communication appelé (B), le système étant configuré pour mettre en œuvre le procédé selon l'une quelconque des revendication précédentes.

## Patentansprüche

1. Verfahren zur Verwaltung des Empfangs eines Telefonanrufsignals auf einem angerufenen Kommunikationsendgerät (B), insbesondere einem tragbaren angerufenen Kommunikationsendgerät, zwecks Herstellung einer Telefonverbindung mit einem anrufenden Kommunikationsendgerät (A), insbesondere einem tragbaren anrufenden Kommunikationsendgerät, wobei die Telefonverbindung über mindestens einen Server (S1, S3) hergestellt wird, der mit dem angerufenen Kommunikationsendgerät (B) und dem anrufenden Kommunikationsendgerät (A) verbunden ist, wobei das angerufene Kommunikationsendgerät (B) imstande ist, das Telefonanrufsignal gemäß mindestens zwei Herstellungsmodi der Telefonverbindung zu empfangen, umfassend einen Modus "Voice", bei dem die Telefonverbindung zwischen dem angerufenen Kommunikationsendgerät (B) und dem Server (S1) über ein Telefonkommunikationsnetzwerk (N) gesichert wird, und einen Modus "Daten", bei dem die Telefonverbindung zwischen dem angerufenen Kommunikationsendgerät (B) und dem Server (S1, S3) über ein Datenkommunikationsnetzwerk gemäß einer Technologie "Voice over IP" (VoIP) gesichert wird, wobei das Verfahren durch die direkte Auswahl, durch den Benutzer des Verfahrens, mittels einer speziellen Aktion auf dem angerufenen Kommunikationsendgerät, des Herstellungsmodus der Telefonverbindung gekennzeichnet ist.

2. Verfahren nach Anspruch 1, umfassend die folgenden Schritte, nach dem Senden eines anfänglichen Telefonanrufsignals (11) ab einem anrufenden Kommunikationsendgerät (A) über ein Telefonkommunikationsnetzwerk (N) an eine Nummer, die einem angerufenen Kommunikationsendgerät (B) eines Benutzers des Verfahrens entspricht:
- das Empfangen (12), durch einen Anrufserver (S1), des von dem anrufenden Kommunikationsendgerät (A) gesendeten Telefonanrufsignals (11);
- das Zuweisen, durch den Anrufserver (S1), einer temporären Nummer an das anrufende Kommunikationsendgerät (A);
- das Zustellen (141/151, 142) des Telefonanrufsignals und der temporären Nummer an einen VolP-Server (S3) und an einen Applikationsserver (S2), wobei der VoIP- (S3) und Applikationsserver (S2) mit dem angerufenen Kommunikationsendgerät (B) verbunden sind;
- das Zustellen (16) des Telefonanrufsignals und der temporären Nummer an das angerufene Kommunikationsendgerät (B) durch den Applikationsserver (S2);
- das Anzeigen, auf einem Bildschirm des angerufenen Kommunikationsendgeräts (B), einer Mensch-Maschine-Schnittstelle, die es dem Benutzer erlaubt, den Herstellungsmodus der Telefonverbindung zu wählen;
- das Auswählen, durch den Benutzer, über die Mensch-Maschine-Schnittstelle, des Herstellungsmodus der Telefonverbindung.

3. Verfahren nach vorangehendem Anspruch, wobei das Erhalten der temporären Nummer durch den Anrufserver (S1) durch Abfragen einer Datenbank (DB1) verfügbarer temporärer Nummern erfolgt.

4. Verfahren nach einem der Ansprüche 2 bis 3, umfassend übrigens:
- wenn der Benutzer entscheidet, das Telefonanrufsignal im Modus "Voice" zu empfangen,
∘ das Senden, durch das angerufene Kommunikationsendgerät (B), eines Rück-Telefonanrufsignals (181) an die temporäre Nummer, die dem anrufenden Kommunikationsendgerät (A) von dem Anrufserver (S1) zugewiesen wurde, wobei das Rück-Telefonanrufsignal (181) über das Telefonkommunikationsnetzwerk (N) gesendet wird;
∘ das Empfangen (191) des Rück-Telefonanrufsignals (181) durch den Anrufserver (S1);
∘ das Wiederherstellen der Telefonverbindung durch den Anrufserver (S1) durch Anstoßen zwischen dem von dem anrufenden Kommunikationsendgerät (A) anfänglich gesendeten Telefonanrufsignal (11, 12) und dem von dem angerufenen Kommunikationsendgerät gesendeten Rück-Telefonanrufsignal (181, 191);
- wenn der Benutzer entscheidet, das Telefonanrufsignal im Modus "Daten" zu empfangen:
∘ das Senden, durch das angerufene Kommunikationsendgerät (B), eines Rück-Telefonanrufsignals (VoIP) an die temporäre Nummer, die dem anrufenden Kommunikationsendgerät (A) von dem Anrufserver (S1) zugewiesen wurde, wobei das Rück-Telefonanrufsignal (181) über das Datenkommunikationsnetzwerk des VolP-Servers (S3) gesendet wird;
∘ das Übertragen des Rück-Anrufsignals durch den VolP-Server (S3) an den Anrufserver (S2);
∘ das Empfangen des Rück-Telefonanrufsignals durch den Anrufserver;
∘ das Wiederherstellen der Telefonverbindung durch den Anrufserver (S1) durch Anstoßen zwischen dem von dem anrufenden Kommunikationsendgerät (A) anfänglich gesendeten Telefonanrufsignal (11, 12) und dem von dem angerufenen Kommunikationsendgerät (B) gesendeten Rück-Telefonanrufsignal (VoIP).

5. Verfahren nach einem der vorangehenden Ansprüche, kombiniert mit Anspruch 2, umfassend die folgenden Schritte nach dem Senden eines anfänglichen Telefonanrufsignals (21) ab einem anrufenden Kommunikationsendgerät (A) über ein Datenkommunikationsnetzwerk gemäß einer VolP-Technologie an eine Nummer, die einem angerufenen Kommunikationsendgerät (B) eines Benutzers des Verfahrens entspricht:
- das Empfangen, durch den VolP-Server (S3), des von dem anrufenden Kommunikationsendgerät (A) gesendeten Telefonanrufsignals (21);
- das Zustellen (22) des Telefonanrufsignals (21) an den Applikationsserver (S2);
- das Zuweisen, durch den Applikationsserver (S2), einer temporären Nummer an das anrufende Kommunikationsendgerät (A);
- das Zustellen des Telefonanrufsignals (21) und der temporären Nummer an das angerufene Kommunikationsendgerät;
- das Anzeigen, auf einem Bildschirm des angerufenen Kommunikationsendgeräts (B), einer Mensch-Maschine-Schnittstelle, die es dem Benutzer erlaubt, den Herstellungsmodus der Telefonverbindung zu wählen;
- das Auswählen, durch den Benutzer, über die Mensch-Maschine-Schnittstelle, des Herstellungsmodus der Telefonverbindung.

6. Verfahren nach vorangehendem Anspruch, wobei das Erhalten der temporären Nummer durch den Applikationsserver (S2) durch Abfragen (231) einer Datenbank (DB1) verfügbarer temporärer Nummern erfolgt.

7. Verfahren nach einem der Ansprüche 5 bis 6, umfassend übrigens:
- wenn der Benutzer entscheidet, das Telefonanrufsignal im Modus "Voice" zu empfangen,
∘ das Senden, durch das angerufene Kommunikationsendgerät (B), eines Rück-Telefonanrufsignals (251) an die temporäre Nummer, die dem anrufenden Kommunikationsendgerät (A) von dem Applikationsserver (S2) zugewiesen wurde, wobei das Rück-Telefonanrufsignal über das Telefonkommunikationsnetzwerk (N) gesendet wird;
∘ das Empfangen (261) des Rück-Telefonanrufsignals (251) durch den Anrufserver (S1);
∘ das Übertragen (281) des Rück-Telefonanrufsignals durch den Anrufserver (S1) an den VolP-Server (S3);
∘ das Wiederherstellen (200) der Telefonverbindung durch den VolP-Server (S3) durch Anstoßen zwischen dem von dem anrufenden Kommunikationsendgerät (A) anfänglich gesendeten Telefonanrufsignal (21) und dem von dem angerufenen Kommunikationsendgerät (B) gesendeten Rück-Telefonanrufsignal;
- wenn der Benutzer entscheidet, das Telefonanrufsignal im Modus "Daten" zu empfangen:
∘ das Senden (VoIP), durch das angerufene Kommunikationsendgerät (B), eines Rück-Telefonanrufsignals an die temporäre Nummer, die dem anrufenden Kommunikationsendgerät von dem Anrufserver zugewiesen wurde, wobei das Rück-Telefonanrufsignal über das Datenkommunikationsnetzwerk über den VolP-Server (S3) gesendet wird;
∘ das Wiederherstellen (200) der Telefonverbindung durch den VolP-Server durch Anstoßen zwischen dem von dem anrufenden Kommunikationsendgerät anfänglich gesendeten Telefonanrufsignal und dem von dem angerufenen Kommunikationsendgerät gesendeten Rück-Telefonanrufsignal.

8. Verfahren nach einem der vorangehenden Ansprüche, kombiniert mit Anspruch 2, wobei das angerufene Kommunikationsendgerät (B) eine Softwareanwendung (Z) aufweist, die imstande ist, jede Zustellung eines von dem Applikationsserver (S2) zugestellten Telefonanrufsignals zu empfangen, die Mensch-Maschine-Schnittstelle anzuzeigen und das Senden, durch das angerufene Kommunikationsendgerät (B), des Rück-Telefonanrufsignals im Modus "Voice" (181, 251) oder im Modus "Daten" in Abhängigkeit vom von dem Benutzer gewählten Herstellungsmodus der Kommunikation zu steuern (171, 241).

9. Verfahren nach einem der vorangehenden Ansprüche, kombiniert mit Anspruch 2, wobei das anfänglichen Telefonanrufsignal über das Telefonkommunikationsnetzwerk an eine virtuelle Nummer des Benutzers des Verfahrens gesendet wird, wobei der Applikationsserver (S2) imstande ist, die virtuelle Nummer dem angerufenen Kommunikationsendgerät (B) zuzuordnen.

10. Kommunikationsnetzwerksystem, umfassend einen Anrufserver (S1), einen VolP-Server (S3), einen Applikationsserver (S2), eine Datenbank verfügbarer temporärer Nummern (DB1), ein Telefonkommunikationsnetzwerk (N), das imstande ist, mit einem anrufenden Kommunikationsendgerät (A) und mit einem angerufenen Kommunikationsendgerät (B) verbunden zu sein, und ein Datenkommunikationsnetzwerk, das imstande ist, mit einem anrufenden Kommunikationsendgerät (A) und einem angerufenen Kommunikationsendgerät (B) verbunden zu sein, wobei das System ausgelegt ist, um das Verfahren nach einem der vorangehenden Ansprüche durchzuführen.

## Claims

1. Method for managing the reception of a telephone call signal on a called communication terminal (B), in particular a portable called communication terminal, in view of establishing a telephone connection with a calling communication terminal (A), in particular a portable calling communication terminal, said telephone connection being established through at least one server (S1, S3) connected to said called communication terminal (B) and to said calling communication terminal (A), said called communication terminal (B) being capable of receiving the telephone call signal according to at least two modes for establishing the telephone connection, comprising a "voice" mode, wherein the telephone connection between the called communication terminal (B) and the server (S1) is ensured through a telephone communication network (N), and a "data" mode, wherein the telephone connection between the called communication terminal (B) and the server (S1, S3) is ensured through a data communication network according to a "voice over IP" (VoIP) technology, said method being **characterised by** the direct selection, by the user of the method, via a specific action on said called communication terminal, of the mode for establishing the telephone connection.

2. Method according to claim 1, comprising the following steps, following the sending of an initial telephone call signal (11) from a calling communication terminal (A) on a telephone communication network (N), destined for a number corresponding to a called communication terminal (B) of a user of the method:
- receiving (12) by a call server (S1) the telephone call signal sent (11) by the calling communication terminal (A);
- allocating by the call server (S1) a temporary number to the calling communication terminal (A);
- notifying (141/151, 142) the telephone call signal and the temporary number to a voice over IP server (S3) and to an application server (S2), said voice over IP (S3) and application (S2) servers being connected to the called communication terminal (B);
- notifying (16) the telephone call signal and the temporary number to the called communication terminal (B) by the application server (S2);
- displaying on a screen the called communication terminal (B) of a human-machine interface enabling the user to choose the mode for establishing the telephone connection;
- selecting by the user, via said human-machine interface, the mode for establishing the telephone connection.

3. Method according to the preceding claim, wherein the obtaining of the temporary number by the call server (S1) is carried out by consultation of a database (DB1) of available temporary numbers.

4. Method according to one of claims 2 to 3, furthermore comprising:
- if the user chooses to receive the telephone call signal in "voice" mode,
∘ sending by the called communication terminal (B) a return telephone call signal (181) destined for the temporary number allocated by the call server (S1) to the calling communication terminal (A), said return telephone call signal (181) being sent on the telephone communication network (N);
∘ receiving (191) by the call server (S1) the return telephone call signal (181);
∘ reconstituting by the call server (S1), by end to end connection between the telephone call signal sent initially (11, 12) by the calling communication terminal (A) and the return telephone call signal (181, 191) sent by the called communication terminal, the telephone connection;
- if the user chooses to receive the telephone call signal in "data" mode:
∘ sending by the called communication terminal (B) a return telephone call signal (VoIP) destined for the temporary number allocated by the call server (S1) to the calling communication terminal (A), said return telephone call signal being sent on the data communication network through the voice over IP server (S3);
o transmitting the return call signal by the voice over IP server to the call server (S2);
o receiving by the call server the return telephone call signal;
o reconstituting the telephone connection by the call server (S1), by end to end connection between the telephone call signal sent initially (11, 12) by the calling communication terminal (A) and the telephone call signal (VoIP) sent by the called communication terminal (B).

5. Method according to one of the preceding claims combined with claim 2, comprising the following steps, following the sending of an initial telephone call signal (21) from a calling communication terminal (A) on a data communication network, according to a voice over IP technology, destined for a number corresponding to a called communication terminal (B) of a user of the method:
- receiving by the voice over IP server (S3) the telephone call signal (21) sent by the calling communication terminal (A);
- notifying (22) the telephone call signal (21) to the application server (S2);
- allocating by the application server (S2) a temporary number to the calling communication terminal (A);
- notifying the telephone call signal (21) and the temporary number to the called communication terminal;
- displaying on a screen the called communication terminal (B) of a human-machine interface enabling the user to choose the mode for establishing the telephone connection
- selecting by the user, via said human-machine interface, the mode for establishing the telephone connection.

6. Method according to the preceding claim, wherein obtaining the temporary number by the application server (S2) is carried out by consultation (231) of a database (DB1) of available temporary numbers.

7. Method according to one of claims 5 to 6, furthermore comprising:
- if the user chooses to receive the telephone call signal in "voice" mode,
∘ sending by the called communication terminal (B) a return telephone call signal (251) destined for the temporary number allocated by the application server (S2) to the calling communication terminal (A), said return telephone call signal being sent on the telephone communication network (N);
∘ receiving (261) by the call server (S1) the return telephone call signal (251);
∘ transmitting (281) the return telephone call signal by the call server (S1) to the voice over IP server (S3);
∘ reconstituting (200) the telephone connection by the voice over IP server (S3), by end to end connection between the telephone call signal sent initially (21) by the calling communication terminal (A) and the return telephone call signal sent by the called communication terminal (B);
- if the user chooses to receive the telephone call signal in "data" mode:
∘ sending (VoIP) by the called communication terminal (B) a return telephone call signal destined for the temporary number allocated by the call server to the calling communication terminal, said return telephone call signal being sent on the data communication network through the voice over IP server (S3);
∘ reconstituting (200) the telephone connection by the voice over IP server, by end to end connection between the telephone call signal sent initially by the calling communication terminal and the return telephone call signal sent by the called communication terminal.

8. Method according to any one of the preceding claims combined with claim 2, wherein the called communication terminal (B) comprises a software application (Z) capable of receiving any notification of telephone call signal notified by the application server (S2), of displaying said human-machine interface and of commanding (171, 241) the sending by said called communication terminal (B) of the return telephone call signal, in "voice" mode (181, 251) or in "data" mode (VoIP), as a function of the mode for establishing the communication chosen by the user.

9. Method according to any one of the preceding claims combined with claim 2, wherein the initial telephone call signal is sent, through the telephone communication network, destined for a virtual number of the user of the method, the application server (S2) being capable of associating said virtual number with the called communication terminal (B).

10. Communication network system, comprising a call server (S1), a voice over IP server (S3), an application server (S2), a database of available temporary numbers (DB1), a telephone communication network (N) capable of being connected to a calling communication terminal (A) and to a called communication terminal (B), and a data communication network capable of being connected to a calling communication terminal (A) and to a called communication terminal (B), the system being configured to implement the method according to any one of the preceding claims.
